# EUROPÄISCHE PATENTANMELDUNG

(11) **EP 4 015 132 A1**
(43) Veröffentlichungstag der Anmeldung: **22.06.2022**
(21) Anmeldenummer: 20214837.5
(22) Anmeldetag: 17.12.2020
(51) Int. Cl.: B23K 9/20, B23K 9/32

(54) **SCHWEISSVORRICHTUNG ZUM VERSCHWEISSEN EINES SCHWEISSBOLZENS MIT EINEM UNTERGRUND MIT GASVERTEILUNG**

(71) Anmelder: Hilti Aktiengesellschaft, 9494 Schaan (LI)
(72) Erfinder: Erhardt, Rolf, 9470 Buchs SG (CH); Lippuner, Ralph, 9470 Buchs (CH); Schulte Suedhoff, Eric, 6800 Feldkirch (AT)
(74) Vertreter: Hilti Aktiengesellschaft Corporate Intellectual Property

(57) **Zusammenfassung**

diese anmeldung betrifft eine Schweissvorrichtung zur Verschweissung eines Schweissbolzens entlang einer Schweissachse in einer Schweissrichtung mit einem Untergrund, umfassend eine Schutzgasglocke mit einer Schweisskammer und eine Haltevorrichtung zum Halten des Schweissbolzens innerhalb der Schweisskammer während eines Schweissvorgangs, wobei die Schutzgasglocke einen Eingangskanal (355), eine Verteilkammer (356), eine Vielzahl von ersten Verbindungskanälen (350) und einen Schutzgaseinlass (360) in die Schweisskammer aufweist, wobei an den Eingangskanal (355) eine Schutzgaszuleitung anschliessbar ist, wobei der Eingangskanal (355) in die Verteilkammer (356) mündet, wobei die ersten Verbindungskanäle (350) mit verschiedenen Abständen zu dem Eingangskanal (355) in die Verteilkammer (356) münden, wobei die ersten Verbindungskanäle (350) die Verteilkammer (360) pneumatisch mit dem Schutzgasauslass verbinden, und wobei eine gemeinsame Querschnittsfläche der ersten Verbindungskanäle (350) umso grösser ist, je grösser der Abstand ist, mit dem die ersten Verbindungskanäle (350) zu dem Eingangskanal (355) in die Verteilkammer (356) münden.

## Beschreibung

### Technisches Gebiet

Die Erfindung betrifft allgemein eine Schweissvorrichtung zur Verschweissung eines Schweissbolzens entlang einer Schweissachse in einer Schweissrichtung mit einem Untergrund. Im Besonderen betrifft die Erfindung eine Schweisspistole.

### Stand der Technik

Es sind etliche Vorrichtungen und Verfahren bekannt, mit denen verschiedene Bolzen in unterschiedlichen Anwendungsfällen an einem Untergrund befestigt werden. Beispielsweise wird ein Bolzen mit dem Untergrund in Kontakt gebracht und mit elektrischem Strom beaufschlagt. Dazu wird der Bolzen von einem elektrisch leitfähigen Bolzenhalter gehalten. Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der elektrische Strom abgeschaltet und der Bolzen in das verflüssigte Material eingetaucht, während dieses Material erkaltet und fest wird. Der Bolzen ist dann stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist es bekannt, die Kontaktstelle zwischen dem Bolzen und dem Untergrund mit einem Schutzgas zu spülen. Dabei strömt das Schutzgas an der Schweissstelle mit dem verflüssigten Material vorbei und verdrängt den dort unter Umständen vorhandenen Sauerstoff aus der Umgebungsluft.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen.

### Darstellung der Erfindung

Aufgabe der Erfindung ist es, eine Vorrichtung zur Verfügung zu stellen, mit welchem eine Befestigung eines Bolzens an einem Untergrund verbessert wird.

Diese Aufgabe ist bei einer Schweissvorrichtung zur Verschweissung eines Schweissbolzens entlang einer Schweissachse in einer Schweissrichtung mit einem Untergrund, umfassend eine Schutzgasglocke mit einer Schweisskammer und eine Haltevorrichtung zum Halten des Schweissbolzens innerhalb der Schweisskammer während eines Schweissvorgangs, wobei die Schutzgasglocke einen Eingangskanal, eine Verteilkammer, eine Vielzahl von ersten Verbindungskanälen und einen Schutzgaseinlass in die Schweisskammer aufweist, wobei an den Eingangskanal eine Schutzgaszuleitung anschliessbar ist, wobei der Eingangskanal in die Verteilkammer mündet, wobei die ersten Verbindungskanäle mit verschiedenen Abständen zu dem Eingangskanal in die Verteilkammer münden, wobei die ersten Verbindungskanäle die Verteilkammer pneumatisch mit dem Schutzgasauslass verbinden, dadurch gelöst, dass eine gemeinsame Querschnittsfläche der ersten Verbindungskanäle umso grösser ist, je grösser der Abstand ist, mit dem die ersten Verbindungskanäle zu dem Eingangskanal in die Verteilkammer münden. Dies bewirkt eine teilweise Kompensation einer geringeren Beaufschlagung derjenigen ersten Verbindungskanäle, die einen grösseren Abstand zu dem Eingangskanal haben. Dadurch strömt das Schutzgas unter Umständen gleichförmiger auf die Schweissstelle zu. Die Schweissvorrichtung ist bevorzugt als Schweisspistole ausgebildet.

Eine vorteilhafte Ausgestaltung ist dadurch gekennzeichnet, dass eine Querschnittsfläche einzelner erster Verbindungskanäle umso grösser ist, je grösser der Abstand ist, mit dem die ersten Verbindungskanäle zu dem Eingangskanal in die Verteilkammer münden. Eine weitere vorteilhafte Ausgestaltung ist dadurch gekennzeichnet, dass eine Dichte einzelner erster Verbindungskanäle umso grösser ist, je grösser der Abstand ist, mit dem die ersten Verbindungskanäle zu dem Eingangskanal in die Verteilkammer münden.

Eine vorteilhafte Ausgestaltung ist dadurch gekennzeichnet, dass der Schutzgaseinlass eine Vielzahl von ringförmig um die Schweissachse angeordneten Einlassöffnungen umfasst.

Eine vorteilhafte Ausgestaltung ist dadurch gekennzeichnet, dass die ersten Verbindungskanäle im Wesentlichen parallel zur Schweissachse verlaufen. Eine weitere vorteilhafte Ausgestaltung ist dadurch gekennzeichnet, dass die ersten Verbindungskanäle ringförmig um die Schweissachse angeordnet sind. Eine weitere vorteilhafte Ausgestaltung ist dadurch gekennzeichnet, dass die Verteilkammer ringförmig um die Schweissachse ausgebildet ist.

Eine vorteilhafte Ausgestaltung ist dadurch gekennzeichnet, dass die ersten Verbindungskanäle in die Schweisskammer münden und sich bis zu dem Schutzgaseinlass erstrecken.

Eine vorteilhafte Ausgestaltung ist dadurch gekennzeichnet, dass die Schutzgasglocke eine Sammelkammer und eine Vielzahl von zweiten Verbindungskanälen aufweist, wobei die ersten Verbindungskanäle und die zweiten Verbindungskanäle in die Sammelkammer münden, und wobei die zweiten Verbindungskanäle die Sammelkammer pneumatisch mit dem Schutzgaseinlass verbinden. Bevorzugt ist eine gemeinsame Querschnittsfläche der zweiten Verbindungskanäle kleiner als eine gemeinsame Querschnittsfläche der ersten Verbindungskanäle. Ebenfalls bevorzugt verlaufen die zweiten Verbindungskanäle im Wesentlichen parallel zur Schweissachse. Ebenfalls bevorzugt sind die zweiten Verbindungskanäle ringförmig um die Schweissachse angeordnet. Ebenfalls bevorzugt ist die Sammelkammer ringförmig um die Schweissachse ausgebildet. Ebenfalls bevorzugt münden die zweiten Verbindungskanäle in die Schweisskammer und erstrecken sich bis zu dem Schutzgaseinlass.

Eine vorteilhafte Ausgestaltung ist dadurch gekennzeichnet, dass die Schutzgasglocke eine in die Schweissrichtung weisende Mündung aufweist.

### Ausführungsbeispiele

Die Erfindung wird nachstehend anhand von Ausführungsbeispielen unter Bezugnahme auf die Zeichnungen näher erläutert. Es zeigen:
- Fig. 1: schematisch eine Schweissvorrichtung,
- Fig. 2: schematisch eine Schweissvorrichtung in einer teilweisen Längsschnittsansicht,
- Fig. 3: schematisch eine Verteilkammer,
- Fig. 4: eine Sammelkammer,
- Fig. 5: schematisch eine Schutzgasglocke in einer aufgewickelten Längsschnittansicht, und
- Fig. 6: schematisch eine Schutzgasglocke in einer aufgewickelten Längsschnittansicht.

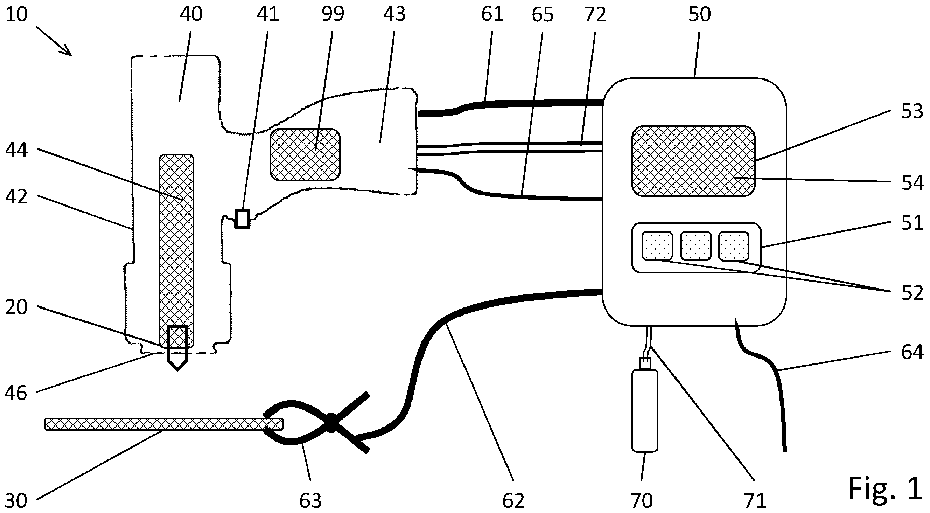

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, ein als Gasflasche ausgebildetes Gasreservoir 70, eine schlauchförmige Gasversorgungsleitung 71 und einen Gasschlauch 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Die Gasversorgungsleitung 71 und der Gasschlauch 72 dienen einer Versorgung eines Kontaktbereichs zwischen dem Schweissbolzen 20 und dem Untergrund 30 mit einem Schutzgas aus dem Gasreservoir 70, um den Kontaktbereich während eines Schweissvorgangs vor einer Oxidation durch Sauerstoff einer Umgebung zu schützen. Zur Steuerung eines Gasflusses zu dem Kontaktbereich umfasst das Gasreservoir 70, die Gasversorgungsleitung 71, das Schweissgerät 50, der Gasschlauch 72 oder die Schweisspistole 40 ein nicht gezeigtes, insbesondere regelbares Ventil auf.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer in Fig. 1 nicht gezeigten Steuereinrichtung der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

Die Schweisspistole 40 weist ein Gehäuse 42 mit einer Mündung 46 auf, von welchem ein Handgriff 43 mit dem Auslöseschalter 41 abragt. Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner eine Steuereinrichtung 99 zum Steuern der verschiedenen Komponenten und Einrichtungen der Schweisspistole und des Schweissgeräts 50 auf. Die Steuereinrichtung 99 ist zum Steuern eines oder mehrerer Parameter des Schweissvorgangs vorgesehen. Die Steuereinrichtung 99 umfasst dazu verschiedene elektronische Bauteile, wie beispielsweise einen oder mehrere Mikroprozessoren, einen oder mehrere temporäre oder dauerhafte Datenspeicher und dergleichen, auf.

Die Schweisspistole 40 weist ferner eine als ein erster Hubmagnet ausgebildete Bolzenabhubeinrichtung auf, welche den Bolzenhalter 44 mit einer Kraft von der Mündung 46 weg nach hinten (in Fig. 1 nach oben) beaufschlagt, wenn die Bolzenabhubeinrichtung aktiviert ist. Über eine nicht gezeigte Signalleitung kommuniziert die Steuereinrichtung 99 mit der Bolzenabhubeinrichtung, um die Bolzenabhubeinrichtung zu steuern, insbesondere zu aktivieren und zu deaktivieren.

Die Schweisspistole 40 weist ferner eine als Federelement oder als ein zweiter Hubmagnet ausgebildete Bolzeneintaucheinrichtung auf, welche den Bolzenhalter 44 mit einer Kraft zu der Mündung 46 hin nach vorne (in Fig. 1 nach unten) beaufschlagt, wenn die Bolzeneintaucheinrichtung aktiviert ist. Über eine nicht gezeigte Signalleitung kommuniziert die Steuereinrichtung 99 mit der Bolzeneintaucheinrichtung, um die Bolzeneintaucheinrichtung zu steuern, insbesondere zu aktivieren und zu deaktivieren. Wenn die Bolzeneintaucheinrichtung als ein Federelement ausgebildet ist, wird dieses Federelement vorzugsweise gespannt, wenn der Bolzenhalter von der Bolzenabhubeinrichtung nach hinten bewegt wird, so dass das Federelement den Bolzenhalter nach vorne bewegt, sobald die Bolzenabhubeinrichtung deaktiviert wird.

Bei einem Schweissverfahren mit der Schweissvorrichtung 10 werden zunächst der Untergrund 30 und der Bolzen 20 zur Verfügung gestellt. In einem weiteren Schritt werden von einem Anwender über die Eingabeeinrichtung Informationen eingegeben, beispielsweise über gewünschte Parameter des folgenden Schweissvorgangs. In einem weiteren Schritt wird der Schweissbolzen 20 von dem Schweissgerät 50 mittels des ersten Kabels 61 und des zweiten Kabels 62 mit einem Schweissstrom zwischen dem Schweissbolzen 20 und dem Untergrund 30 beaufschlagt. In einem weiteren Schritt wird der Schweissbolzen 20 mittels der Bolzenabhubeinrichtung von dem Untergrund unter Beibehaltung des zwischen dem Schweissbolzen 20 und dem Untergrund 30 fliessenden Schweissstroms abgehoben, wobei sich zwischen dem Schweissbolzen 20 und dem Untergrund 30 ein Lichtbogen ausbildet. Insbesondere aufgrund der von dem Lichtbogen erzeugten Hitze wird dann ein Material des Schweissbolzens 20 und/oder des Untergrunds 30 teilweise verflüssigt. In einem weiteren Schritt wird der Schweissbolzen 20 mittels der Bolzeneintaucheinrichtung in das verflüssigte Material des Schweissbolzens 20 beziehungsweise des Untergrunds 30 eingetaucht. Danach erstarrt das verflüssigte Material des Schweissbolzens 20 beziehungsweise des Untergrunds 30, so dass der Schweissbolzen 20 stoffschlüssig mit dem Untergrund 30 verbunden ist.

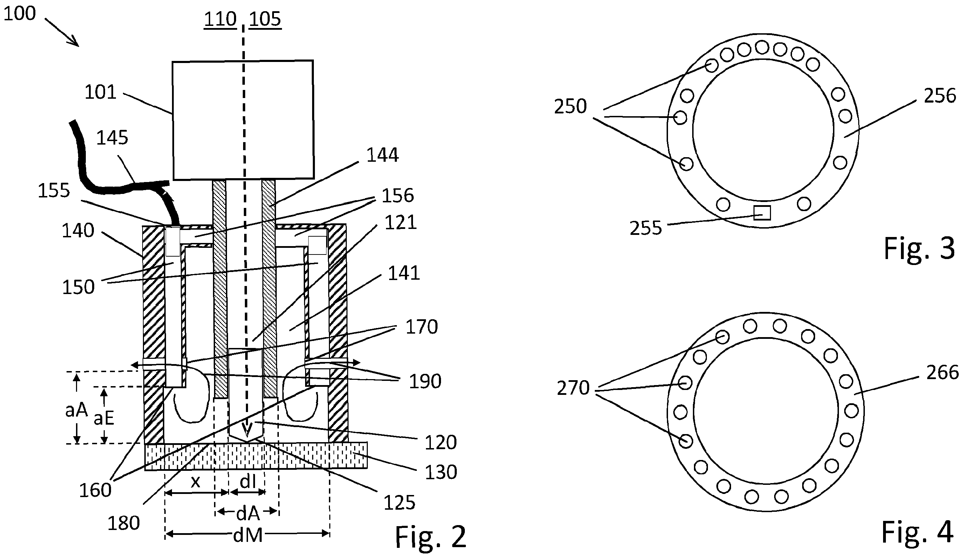

In Fig. 2 ist eine Schweissvorrichtung 100 schematisch in einem Längsschnitt dargestellt, welche zur Verschweissung eines Schweissbolzens 120 entlang einer Schweissachse 105 in einer Schweissrichtung 110 mit einem Untergrund 130 vorgesehen ist. Die Schweissvorrichtung 100 ist als eine die Schweissrichtung 110 definierende Schweisspistole ausgebildet. Die Schweissvorrichtung 100 weist eine als Bolzenhalter ausgebildete Haltevorrichtung 144 mit einem Aussendurchmesser dA auf, welche zum Halten des Schweissbolzens 120 während eines Schweissvorgangs eine Bolzenaufnahme 121 mit einem Innendurchmesser dl aufweist, in welche der Schweissbolzen 120 einsteckbar und vorzugsweise klemmend gehalten ist. Eine Kontaktfläche 125 des Schweissbolzens 120 kontaktiert vor und/oder während des Schweissvorgangs den Untergrund 130.

Die Schweissvorrichtung 100 umfasst ein schematisch dargestelltes Gehäuse 101 mit einem nicht gezeigten Griff und einem nicht gezeigten Auslöseschalter sowie eine Schutzgasglocke 140, welche dafür vorgesehen ist, mit Schutzgas gespült zu werden, um eine Oxidation der Schweissschmelze mit Sauerstoff aus der Umgebungsluft zu unterdrücken oder vollständig zu verhindern. Hierzu weist die Schutzgasglocke 140 einen Schutzgasvorlauf auf, welcher einen Eingangskanal 155, eine Verteilkammer 156 und eine Vielzahl von ringförmig um die Schweissachse 105 angeordneten ersten Verbindungskanälen 150 umfasst. An den Eingangskanal 155 ist eine Schutzgaszuleitung, beispielsweise ein Schutzgasschlauch 145 oder dergleichen, zur Versorgung der Schutzgasglocke 140 anschliessbar.

Jeder der parallel zu der Schweissachse 105 verlaufenden ersten Verbindungskanäle 150 mündet mit einer Einlassöffnung 160 in eine Schweisskammer 141 der Schutzgasglocke 140, so dass die Einlassöffnungen 160 ebenfalls ringförmig um die Schweissachse 105 angeordnet sind und zusammen einen Schutzgaseinlass bilden. Der Eingangskanal 155 und die ersten Verbindungskanäle 150 münden in die Verteilkammer 156, wobei die ersten Verbindungskanäle 150 die Verteilkammer 156 pneumatisch mit dem Schutzgaseinlass verbinden. Eine Querschnittsfläche jeweils der einzelnen ersten Verbindungskanäle 150 ist umso grösser, je grösser der Abstand ist, mit dem die ersten Verbindungskanäle 150 zu dem Eingangskanal 155 in die Verteilkammer 156 münden. Ein Druckabfall über die ringförmig um die Schweissachse 105 ausgebildete Verteilkammer 156 von dem Eingangskanal 155 weg verursacht eine geringere Beaufschlagung derjenigen ersten Verbindungskanäle 150, die einen grösseren Abstand zu dem Eingangskanal 155 haben (in Fig. 2 auf der rechten Seite). Diese geringere Beaufschlagung wird durch die vergrösserte Querschnittsfläche teilweise kompensiert. Dadurch strömt das Schutzgas unter Umständen gleichförmiger auf die Schweissstelle zu.

Ausserdem weist die Schutzgasglocke 140 eine Vielzahl von ebenfalls ringförmig um die Schweissachse angeordneten Auslassöffnungen 170 auf, welche bezüglich der Schweissachse 105 radial durch die Schutzgasglocke 140 nach aussen in die Umgebung führen und einen Schutzgasauslass bilden. In einer Richtung quer zu der Schweissachse 105 (in Fig. 2 senkrecht zur Zeichenebene), insbesondere in umlaufender Richtung, sind die Auslassöffnungen 170 jeweils versetzt zu den Einlassöffnungen 160 angeordnet.

Weiterhin weist die Schutzgasglocke 140 eine in die Schweissrichtung 110 weisende Mündung 180 auf, welche quer zu der Schweissrichtung 110 einen Mündungsdurchmesser dM aufweist. Der Schutzgaseinlass, nämlich die Einlassöffnungen 160, weisen entgegen der Schweissrichtung 110 einen Einlassabstand aE zu der Mündung 180 auf. Der Schutzgasauslass, nämlich die Auslassöffnungen 170, weisen entgegen der Schweissrichtung 110 einen Auslassabstand aA zu der Mündung 180 auf.

Der Auslassabstand aA ist etwa halb so gross wie eine Differenz aus dem Mündungsdurchmesser dM und dem Innendurchmesser dl, also etwa so gross wie ein radialer Abstand x zwischen dem Schweissbolzen 120 und der Schutzgasglocke 140. Ausserdem ist der Auslassabstand aA grösser als der Einlassabstand aE. Wenn die Mündung 180 von dem Untergrund 130 abgedeckt ist, strömt durch die Einlassöffnungen 160 in die Schweisskammer 141 einströmendes Schutzgas entlang den Strömungspfaden 190 erst auf einen radial äusseren Bereich der Mündung 180 zu, dann von allen Seiten radial nach innen auf den Schweissbolzen 120 zu, und dann im Wesentlichen axial nach oben zu den Auslassöffnungen 170. Es bildet sich also ein torusförmiges Strömungsmuster aus, welches radialsymmetrisch um die Schweissachse 105 angeordnet ist und eine gleichmässige und effektive Spülung der Schweissstelle bei dem Schweissbolzen 120 mit Schutzgas bewirkt. Umgebungsluft, welche beispielsweise aus dem engen Spalt zwischen der Haltevorrichtung 144 und der Schutzgasglocke (in Fig. 2 oberhalb der Auslassöffnungen 170) nur langsam entweicht, wird von der Strömung durch die Auslassöffnungen 170 mitgerissen und von der Schweissstelle abgeschirmt.

In Fig. 3 ist eine Verteilkammer 256 eines weiteren Ausführungsbeispiels schematisch dargestellt, wobei die Blickrichtung mit der Schweissrichtung übereinstimmt. In die Verteilkammer 256 münden ein Eingangskanal 255 und eine Vielzahl von ersten Verbindungskanälen 250. Eine Dichte einzelner erster Verbindungskanäle 250 ist umso grösser, je grösser der Abstand ist, mit dem die ersten Verbindungskanäle 250 zu dem Eingangskanal 255 in die Verteilkammer 256 münden. In nächster Nachbarschaft zu dem Eingangskanal 255 (in Fig. 3 unten) sind nur einzelne erste Verbindungskanäle 250 angeordnet. Auf der von dem Eingangskanal 255 aus gesehen gegenüberliegenden Seite der Verteilkammer 256 (in Fig. 3 oben) sind dagegen grössere Gruppen von eng nebeneinander liegenden ersten Verbindungskanälen 250 angeordnet. Dadurch ist eine gemeinsame Querschnittsfläche der ersten Verbindungskanäle 250 umso grösser, je grösser der Abstand ist, mit dem die ersten Verbindungskanäle 250 zu dem Eingangskanal 255 in die Verteilkammer 256 münden.

In Fig. 4 ist eine Sammelkammer 266 des in Fig. 3 gezeigten Ausführungsbeispiels schematisch dargestellt, wobei die Blickrichtung mit der Schweissrichtung übereinstimmt. In die Sammelkammer 266 münden neben den in Fig. 4 nicht gezeigten ersten Verbindungskanälen eine Vielzahl von zweiten Verbindungskanälen 270. Die zweiten Verbindungskanäle 270 sind ringförmig um die Schweissachse angeordnet und gleichmässig über den Umfang der ebenfalls ringförmig um die Schweissachse angeordneten Sammelkammer 266 verteilt. Eine Anzahl der zweiten Verbindungskanäle 270 ist geringer als eine Anzahl der in Fig. 3 gezeigten ersten Verbindungskanäle 250, so dass eine gemeinsame Querschnittsfläche der zweiten Verbindungskanäle 270 kleiner als eine gemeinsame Querschnittsfläche der ersten Verbindungskanäle 250 ist. Dadurch wird unter Umständen eine Strömungsgeschwindigkeit des durch die ersten Verbindungskanäle 250 und die zweiten Verbindungskanäle 270 strömenden Schutzgases vergleichmässigt. Dies bewirkt wiederum eine gleichförmigere Beaufschlagung einer nicht gezeigten Schweissstelle mit Schutzgas.

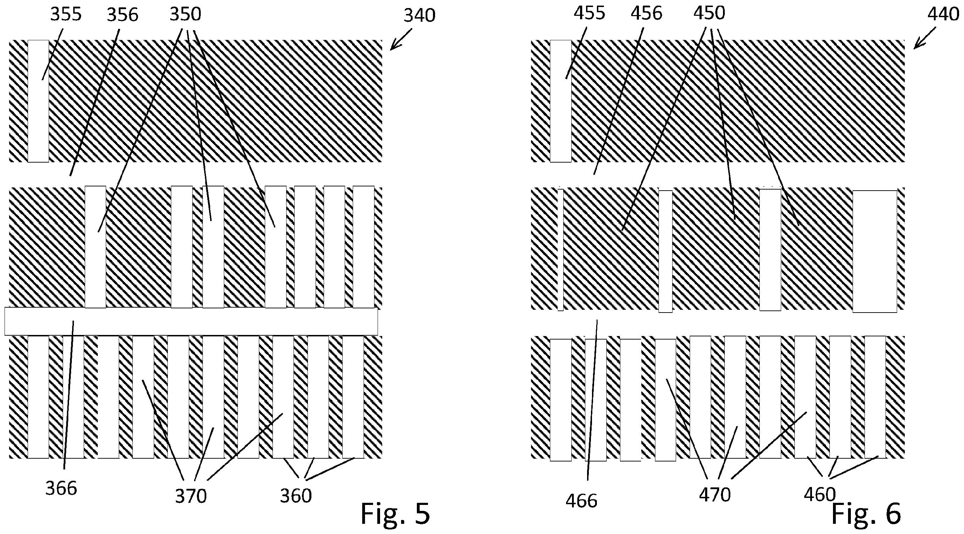

In Fig. 5 eine Schutzgasglocke 340 in einer aufgewickelten Längsschnittansicht dargestellt, so dass die Anordnung der Strömungskanäle entlang einem Umfang der im Wesentlichen zylinderförmigen, insbesondere kreiszylinderförmigen, Schutzgasglocke 340 ersichtlich ist. Die Schutzgasglocke 340 umfasst einen Eingangskanal 355, eine Verteilkammer 356, eine Vielzahl von ersten Verbindungskanälen 350, eine Sammelkammer 366 und eine Vielzahl von zweiten Verbindungskanälen 370. Der Eingangskanal 355 mündet in die Verteilkammer 356. Die ersten Verbindungskanäle 350 münden einerseits in die Verteilkammer 356 und andererseits in die Sammelkammer 366. Die zweiten Verbindungskanäle 370 münden einerseits in die Sammelkammer 366 und andererseits in eine nicht weiter gezeigte Schweisskammer, wozu sie sich bis zu einen Schutzgaseinlass bildenden Einlassöffnungen 360 erstrecken. Der Eingangskanal 355, die ersten Verbindungskanäle 350 und die zweiten Verbindungskanäle 370 verlaufen im Wesentlichen parallel zu einer Schweissachse und verbinden eine an den Eingangskanal 355 angeschlossene Schutzgaszuleitung pneumatisch mit der Schweisskammer der Schutzgasglocke 340.

Mit grösser werdendem Abstand zu dem Eingangskanal 355 sind die ersten Verbindungskanäle 350 in grösser werdenden Gruppen angeordnet, so dass eine Dichte der ersten Verbindungskanäle 350 umso grösser ist, je grösser der Abstand ist, mit dem die ersten Verbindungskanäle 350 zu dem Eingangskanal 355 in die Verteilkammer 356 münden. Dadurch ist auch eine gemeinsame Querschnittsfläche der ersten Verbindungskanäle 350 umso grösser, je grösser der Abstand ist, mit dem die ersten Verbindungskanäle 350 zu dem Eingangskanal 355 in die Verteilkammer 356 münden. Wie zu den vorherigen Ausführungsbeispielen dargelegt, strömt das Schutzgas dadurch unter Umständen gleichförmiger auf die Schweissstelle zu.

In Fig. 6 eine Schutzgasglocke 440 in einer aufgewickelten Längsschnittansicht dargestellt, so dass die Anordnung der Strömungskanäle entlang einem Umfang der im Wesentlichen zylinderförmigen, insbesondere kreiszylinderförmigen, Schutzgasglocke 440 ersichtlich ist. Die Schutzgasglocke 440 umfasst einen Eingangskanal 455, eine Verteilkammer 456, eine Vielzahl von ersten Verbindungskanälen 450, eine Sammelkammer 466 und eine Vielzahl von zweiten Verbindungskanälen 470. Der Eingangskanal 455 mündet in die Verteilkammer 456. Die ersten Verbindungskanäle 450 münden einerseits in die Verteilkammer 456 und andererseits in die Sammelkammer 466. Die zweiten Verbindungskanäle 470 münden einerseits in die Sammelkammer 466 und andererseits in eine nicht weiter gezeigte Schweisskammer, wozu sie sich bis zu einen Schutzgaseinlass bildenden Einlassöffnungen 460 erstrecken. Der Eingangskanal 455, die ersten Verbindungskanäle 450 und die zweiten Verbindungskanäle 470 verlaufen im Wesentlichen parallel zu einer Schweissachse und verbinden eine an den Eingangskanal 455 angeschlossene Schutzgaszuleitung pneumatisch mit der Schweisskammer der Schutzgasglocke 440.

Mit grösser werdendem Abstand zu dem Eingangskanal 455 wird eine Querschnittsfläche einzelner erster Verbindungskanäle 450 umso grösser, je grösser der Abstand ist, mit dem die ersten Verbindungskanäle 450 zu dem Eingangskanal 455 in die Verteilkammer 456 münden. Dadurch ist auch eine gemeinsame Querschnittsfläche der ersten Verbindungskanäle 450 umso grösser, je grösser der Abstand ist, mit dem die ersten Verbindungskanäle 450 zu dem Eingangskanal 455 in die Verteilkammer 456 münden. Wie zu den vorherigen Ausführungsbeispielen dargelegt, strömt das Schutzgas dadurch unter Umständen gleichförmiger auf die Schweissstelle zu.

Die Erfindung wurde anhand von Beispielen einer Schweisspistole beschrieben. Die Merkmale der beschriebenen Ausführungsformen sind dabei auch beliebig miteinander innerhalb einer einzigen Befestigungsvorrichtung kombinierbar. Es wird darauf hingewiesen, dass die erfindungsgemässe Vorrichtung auch für andere Zwecke geeignet ist.

## Patentansprüche

1. Schweissvorrichtung, insbesondere Schweisspistole, zur Verschweissung eines Schweissbolzens entlang einer Schweissachse in einer Schweissrichtung mit einem Untergrund, umfassend eine Schutzgasglocke mit einer Schweisskammer und eine Haltevorrichtung zum Halten des Schweissbolzens innerhalb der Schweisskammer während eines Schweissvorgangs, wobei die Schutzgasglocke einen Eingangskanal, eine Verteilkammer, eine Vielzahl von ersten Verbindungskanälen und einen Schutzgaseinlass in die Schweisskammer aufweist, wobei an den Eingangskanal eine Schutzgaszuleitung anschliessbar ist, wobei der Eingangskanal in die Verteilkammer mündet, wobei die ersten Verbindungskanäle mit verschiedenen Abständen zu dem Eingangskanal in die Verteilkammer münden, wobei die ersten Verbindungskanäle die Verteilkammer pneumatisch mit dem Schutzgasauslass verbinden, **dadurch gekennzeichnet, dass** eine gemeinsame Querschnittsfläche der ersten Verbindungskanäle umso grösser ist, je grösser der Abstand ist, mit dem die ersten Verbindungskanäle zu dem Eingangskanal in die Verteilkammer münden.

2. Schweissvorrichtung nach Anspruch 1, wobei eine Querschnittsfläche einzelner erster Verbindungskanäle umso grösser ist, je grösser der Abstand ist, mit dem die ersten Verbindungskanäle zu dem Eingangskanal in die Verteilkammer münden.

3. Schweissvorrichtung nach einem der vorhergehenden Ansprüche, wobei eine Dichte einzelner erster Verbindungskanäle umso grösser ist, je grösser der Abstand ist, mit dem die ersten Verbindungskanäle zu dem Eingangskanal in die Verteilkammer münden.

4. Schweissvorrichtung nach einem der vorhergehenden Ansprüche, wobei der Schutzgaseinlass eine Vielzahl von ringförmig um die Schweissachse angeordneten Einlassöffnungen umfasst.

5. Schweissvorrichtung nach einem der vorhergehenden Ansprüche, wobei die ersten Verbindungskanäle im Wesentlichen parallel zur Schweissachse verlaufen.

6. Schweissvorrichtung nach einem der vorhergehenden Ansprüche, wobei die ersten Verbindungskanäle ringförmig um die Schweissachse angeordnet sind.

7. Schweissvorrichtung nach einem der vorhergehenden Ansprüche, wobei die Verteilkammer ringförmig um die Schweissachse ausgebildet ist.

8. Schweissvorrichtung nach einem der vorhergehenden Ansprüche, wobei die ersten Verbindungskanäle in die Schweisskammer münden und sich bis zu dem Schutzgaseinlass erstrecken.

9. Schweissvorrichtung nach einem der vorhergehenden Ansprüche, wobei die Schutzgasglocke eine Sammelkammer und eine Vielzahl von zweiten Verbindungskanälen aufweist, wobei die ersten Verbindungskanäle und die zweiten Verbindungskanäle in die Sammelkammer münden, und wobei die zweiten Verbindungskanäle die Sammelkammer pneumatisch mit dem Schutzgaseinlass verbinden.

10. Schweissvorrichtung nach Anspruch 9, wobei eine gemeinsame Querschnittsfläche der zweiten Verbindungskanäle kleiner ist als eine gemeinsame Querschnittsfläche der ersten Verbindungskanäle.

11. Schweissvorrichtung nach einem der Ansprüche 9 bis 10, wobei die zweiten Verbindungskanäle im Wesentlichen parallel zur Schweissachse verlaufen.

12. Schweissvorrichtung nach einem der Ansprüche 9 bis 11, wobei die zweiten Verbindungskanäle ringförmig um die Schweissachse angeordnet sind.

13. Schweissvorrichtung nach einem der Ansprüche 9 bis 12, wobei die Sammelkammer ringförmig um die Schweissachse ausgebildet ist.

14. Schweissvorrichtung nach einem der Ansprüche 9 bis 13, wobei die zweiten Verbindungskanäle in die Schweisskammer münden und sich bis zu dem Schutzgaseinlass erstrecken.

15. Schweissvorrichtung nach einem der vorhergehenden Ansprüche, wobei die Schutzgasglocke eine in die Schweissrichtung weisende Mündung aufweist.
